# EUROPÄISCHE PATENTSCHRIFT

(11) **EP 3 371 012 B1**
(45) Veröffentlichungstag und Bekanntmachung des Hinweises auf die Patenterteilung: **27.05.2020**
(21) Anmeldenummer: 16805373.4
(22) Anmeldetag: 30.11.2016
(51) Int. Cl.: B60T 1/10, B60L 15/20, B60T 13/58, B61H 9/06, B60T 17/22, B60W 30/18, B60L 7/24, H02P 3/00, F16D 69/02

(54) **FAHRZEUG MIT EINER BREMSEINRICHTUNG**
VEHICLE HAVING A BRAKE DEVICE
VÉHICULE ÉQUIPÉ D'UN DISPOSITIF DE FREINAGE

(30) Priorität: 30.12.2015 DE 102015226831
(43) Veröffentlichungstag der Anmeldung: 12.09.2018
(73) Patentinhaber: Siemens Mobility GmbH, 81739 München (DE)
(72) Erfinder: GLINKA, Martin, 91080 Uttenreuth (DE)
(86) Internationale Anmeldenummer: PCT/EP2016/079181
(87) Internationale Veröffentlichungsnummer: WO 2017/114616

(56) Entgegenhaltungen:
- WO-A1-97/38235
- DE-A1-102009 051 019
- DE-A1-102012 203 132

## Beschreibung

Die Erfindung betrifft ein Fahrzeug mit einer Bremseinrichtung, die zumindest eine Reibungsbremseinheit, eine elektrische Bremseinheit und eine Bremssteuereinrichtung aufweist. Gattungsbildende Fahrzeuge sind in DE 10 2009 051019 A1 und DE 10 2012 203132 A1 beschrieben. WO 97/38235 A1 beschreibt die Verwendung eines faserverstärkten Verbundwerkstoffs für Bremskomponente.

Es sind Fahrzeuge bekannt, bei welchen eine Bremskraft durch elektrische Motoren erzeugt wird. Die während der Bremsung von den Motoren generatorisch in elektrische Energie umgewandelte Bewegungsenergie des Fahrzeugs wird z.B. über einen Bremswiderstand in Wärme umgewandelt oder in das Bahnversorgungsnetz oder auch in einen Mobilspeicher zurückgeführt.

Neben der elektrodynamischen, generatorischen Bremse verfügen die Fahrzeuge üblicherweise weiterhin über eine vollwertige Reibungsbremse, bei der die Bremswirkung auf pneumatischem, hydraulischem und/oder mechanischem Weg erreicht wird.

Der Erfindung liegt die Aufgabe zugrunde, ein Fahrzeug mit einer sicheren und konstruktiv einfachen Bremseinrichtung bereitzustellen.

Hierzu wird ein Fahrzeug gemäß Patentanspruch 1 vorgeschlagen. Hierdurch kann gegenüber herkömmlichen Bremseinrichtungen für Fahrzeuge eine vorteilhafte Gewichtseinsparung bei einer zumindest unveränderten Sicherheit der Bremseinrichtung erreicht werden. Der Erfindung liegt die Überlegung zugrunde, dass mit einem gezielten, prioritären Einsatz der elektrischen Bremseinheit gegenüber der Reibungsbremseinheit eine vorteilhafte Entlastung dieser erreicht werden kann. Dank der Überwachungseinrichtung kann ein hohes Sicherheitsniveau beim Einsatz der elektrischen Bremseinheit erreicht werden, sodass diese auch für die Durchführung einer Sicherheitsbremsung - insbesondere im ungünstigsten Fall einer Vollbremsung ausgehend von der höchst zugelassenen Geschwindigkeit des Fahrzeugs und/oder in einer Gefällstrecke - gegenüber der Reibungsbremseinheit prioritär eingesetzt werden kann. Die Anzahl der Fälle, die während der Lebensdauer der Bremskomponenten der Reibungsbremseinheit auftreten können und bei denen eine derartige Vollbremsung überwiegend oder vollständig mittels der Reibungsbremseinheit durchgeführt werden muss, kann demnach gering gehalten werden. Hierdurch kann eine hohe Lebensdauer der Reibungsbremseinheit erreicht werden. Der Erfindung liegt die weitere Überlegung zugrunde, dass eine Bremskomponente aus einem Verbundwerkstoff durchaus in der Lage ist, in einem hohen Temperaturbereich - typischerweise bei Temperaturen über 800 °C - unbeschadet betrieben zu werden. Obwohl diese Temperaturen weit über die typischen Temperaturen liegen, bei welchen eine Oxidation konventioneller, marktüblicher Verbundwerkstoffe und damit verbundene Nachteile eintreten, ist ein derartiges Überschreiten dieser kritischen Oxidationsgrenztemperaturen in diesen nur seltenen Anwendungsfällen einer Vollbremsung ohne Beteiligung der elektrischen Bremseinheit wenig kritisch. Durch die hohe Zuverlässigkeit der elektrischen Bremseinheit kann die Reibungsbremseinheit soweit entlastet werden, dass diese die entsprechende Oxidationsgrenztemperatur in den meisten Bremsfällen - auch "Betriebsbremsungen" genannt - nicht überschreitet. Es können daher für die Auslegung einer sicheren Bremseinrichtung marktübliche, für mittlere Betriebstemperaturen unter 550 °C ausgelegte und leichte Verbundwerkstoffe für die Reibungsbremseinheit eingesetzt werden.

Die aus einem Verbundwerkstoff hergestellten Bremskomponenten der Reibungsbremseinheit sind insbesondere Bremsscheiben. Es können dabei in Kombination mit diesen Bremsscheiben Bremsbeläge aus organischen oder keramischen Werkstoffen eingesetzt werden.

Ein "Verbundwerkstoff" ist ein Werkstoff aus zumindest zwei verbundenen Materialien, der andere Werkstoffeigenschaften besitzt als seine einzelnen Komponenten. Für die Anwendung in Bremskomponenten sind insbesondere Faserverbundwerkstoffe von Vorteil, die eine bettende Matrix aus einem ersten Werkstoff und verstärkende Fasern aus einem zweiten Werkstoff aufweisen. Der Einsatz eines Kohlefaserverbundwerkstoffs bietet zudem den Vorteil einer hohen mechanischen Belastbarkeit.

Der Überwachung eines mittels der elektrischen Bremseinheit durchgeführten Bremsvorgangs liegt zweckmäßigerweise die Erfassung zumindest einer Bremswirkungskenngröße zugrunde. Unter einer "Bremswirkungskenngröße" soll insbesondere eine Kenngröße verstanden werden, mittels welcher zumindest eine Information über eine Bremswirkung der elektrischen Bremseinheit gewonnen werden kann. Diese Bremswirkung kann eine mittels der elektrischen Bremseinheit erzielte Bremswirkung oder eine durch einen Betrieb einer Bremssteuereinheit zu deren Steuerung erzielbare Bremswirkung sein. In der erstgenannten Alternative kann die Überwachungseinrichtung eine Sensoreinheit umfassen, mittels welcher zumindest eine auf das Fahrzeug bezogene Betriebskenngröße, wie z.B. eine momentane Geschwindigkeitskenngröße, eine momentane Beschleunigungskenngröße, eine Bremskraftkenngröße usw. erfassbar ist. Unter einer "Bremswirkung" kann insbesondere eine Bremskraft oder ein Bremsmoment, welche bzw. welches auf zumindest eine Fahrzeugradeinheit, insbesondere einen Fahrzeugradsatz übertragbar ist, oder eine Bremsleistung verstanden werden.

Die Überwachung eines mittels der elektrischen Bremseinheit durchgeführten Bremsvorgangs umfasst vorzugsweise zumindest die Überwachung einer Bremssteuereinheit, die zur Steuerung der elektrischen Bremseinheit beim Durchführen des Bremsvorgangs vorgesehen ist. Dabei kann die Überwachungseinrichtung durch eine aktive Bremssteuereinheit erzeugte Steuersignale zur Steuerung der elektrischen Bremseinheit auswerten, um eine mit den Steuersignalen erzielbare Bremswirkung zu ermitteln.

Die Bremssteuereinrichtung weist sinnvollerweise zumindest eine Bremssteuereinheit zur Steuerung der elektrischen Bremseinheit und wenigstens eine Bremssteuereinheit zur Steuerung der Reibungsbremseinheit auf. Diese Bremseinheiten sind vorzugsweise softwaretechnisch und/oder hardwaretechnisch voneinander unterschiedlich.

Die Überwachungseinrichtung weist zweckmäßigerweise zumindest eine Überwachungseinheit zur Überwachung einer der elektrischen Bremseinheit zugeordneten Bremssteuereinheit auf, wobei die Überwachungseinheit und die Bremssteuereinheit zwei voneinander unterschiedliche, insbesondere voneinander getrennte Einheiten sind.

Unter einer "elektrischen Bremseinheit" soll insbesondere eine Bremseinheit verstanden werden, bei welcher in einem Bremsvorgang zumindest ein Teil der kinetischen Energie des Fahrzeugs in elektrische Energie umgewandelt wird. Beispielsweise kann die elektrische Bremseinheit eine Wirbelstrombremse aufweisen.

In einer vorteilhaften Weiterbildung der Erfindung kann das Fahrzeug eine Speichereinheit aufweisen, in welche zumindest ein Teil einer im Bremsvorgang durch die elektrische Bremseinheit erzeugten elektrischen Energie gespeichert wird und die zumindest eine Batterie und/oder zumindest einen Doppelschichtkondensator aufweist.

In einer besonders bevorzugten Ausführung der Erfindung wird vorgeschlagen, dass die elektrische Bremseinheit zumindest eine Antriebseinheit der Antriebseinrichtung des Fahrzeugs aufweist. Die Antriebseinheit weist typischerweise zumindest einen mit einer Triebradeinheit des Fahrzeugs mechanisch gekoppelten Antriebsmotor und eine Leistungsversorgungseinheit auf, die in einem Traktionsmodus des Fahrzeugs zur Erzeugung einer elektrischen Leistung für den Antriebsmotor vorgesehen ist. In einem Bremsvorgang der elektrischen Bremseinheit werden die Leistungsversorgungseinheit bzw. deren steuerbare leistungselektronische Elemente zweckmäßigerweise mittels einer zugeordneten Bremssteuereinheit derart gesteuert, dass mittels des mit der Leistungsversorgungseinheit in Wirkverbindung stehenden Antriebsmotors ein auf eine Triebradeinheit des Fahrzeugs übertragbares Bremsmoment erzeugt wird. Die Überwachung eines mittels der elektrischen Bremseinheit durchgeführten Bremsvorgangs umfasst dabei vorzugsweise eine Überwachung des Antriebsmotors, einer diesem zugeordneten Leistungsversorgungseinheit und/oder der zugeordneten Bremssteuereinheit zur Steuerung der Leistungsversorgungseinheit.

Eine Triebradeinheit des Fahrzeugs kann in einer vorteilhaften Ausführung eine Radsatzwelle aufweisen, an welcher Fahrzeugräder gekoppelt sind. Dabei kann die Triebradeinheit einer Triebachse des Fahrzeugs entsprechen.

In einer alternativen Ausführung können Triebradeinheiten des Fahrzeugs voneinander unabhängige, jeweils antreibbare Fahrzeugräder sein. In diesem Zusammenhang ist vorteilhaft, wenn mehreren Fahrzeugrädern jeweils zumindest eine der Bremskomponenten der Reibungsbremseinheit und eine Antriebseinheit der Antriebseinrichtung zugeordnet sind, wobei die Antriebseinheit Bestandteil der elektrischen Bremseinheit ist. Dabei kann diese Antriebseinheit einen Radnabenantrieb aufweisen.

Die Bremssteuereinrichtung ist zweckmäßigerweise dazu vorgesehen, in einem normalen Bremsmodus der Bremseinrichtung einen Bremsvorgang prioritär mit der elektrischen Bremseinheit durchzuführen. Darunter soll verstanden werden, dass ein überwiegender Teil der im Bremsvorgang zu erzielenden Bremswirkung möglichst von der elektrischen Bremseinheit zu erzeugen ist. Eine zu erzielende Bremswirkung wird dabei von einem Fahrzeugführer, von einer Fahrzeugsteuerung und/oder von einer Notbremseinrichtung des Fahrzeugs gefordert. Im normalen Bremsmodus dient die Reibungsbremseinheit vorteilhafterweise dazu, die elektrische Bremseinheit zu unterstützen.

Außerdem wird vorgeschlagen, dass die Bremssteuereinrichtung dazu vorgesehen ist, bei einer mittels der Überwachungseinrichtung erkannten Einschränkung der elektrischen Bremseinheit einen Sicherheitsmodus der Reibungsbremseinheit zu aktivieren. Hierdurch kann eine hohe Sicherheit erreicht werden. Eine Einschränkung der elektrischen Bremseinheit kann durch einen Fehler betätigbarer Komponenten der elektrischen Bremseinheit und/oder einer zur Steuerung dieser Komponenten vorgesehenen Bremssteuereinheit verursacht werden. Ist wie oben vorgeschlagen die elektrische Bremseinheit von zumindest einer Antriebseinheit einer Antriebseinrichtung des Fahrzeugs gebildet, kann eine Einschränkung durch einen Fehler einer Antriebskomponente der Antriebseinheit verursacht werden. Dabei kann es sich um einen Fehler eines Antriebsmotors und/oder einer diesem zugeordneten Leistungsversorgungseinheit handeln. Außerdem kann der Fehler durch eine zur Steuerung dieser Leistungsversorgungseinheit vorgesehenen Bremssteuereinheit verursacht werden. Eine "Einschränkung" der elektrischen Bremseinheit kann ein teilweiser Ausfall sein, bei welchem die elektrische Bremseinheit eine kleinere Bremswirkung als eine im fehlerfreien Fall erzeugbare Bremswirkung erzeugen kann, oder ein totaler Ausfall sein. Der Sicherheitsmodus umfasst sinnvollerweise zumindest die Kompensation einer aufgrund der Einschränkung mangelnden Bremswirkung bzw. die Erzeugung der im Normalfall durch die elektrische Bremseinheit erzeugbaren Bremswirkung. Der Sicherheitsmodus kann insbesondere die Ausführung einer Vollbremsung umfassen.

Gemäß einer Ausführungsvariante der Erfindung kann eine besonders hohe Sicherheit erzielt werden, wenn die Bremssteuereinrichtung zumindest zwei Bremssteuereinheiten zur Steuerung der elektrischen Bremseinheit aufweist, die zueinander redundant oder diversitär redundant ausgebildet sind. Zwei Einheiten werden dabei als "diversitär redundant" betrachtet, wenn eine Einheit für eine Rückfallstrategie bei einem Fehler der anderen Einheit eingesetzt wird und die Einheiten konstruktiv und/oder softwaretechnisch auf unterschiedlichen Technologien basieren.

Alternativ oder zusätzlich wird vorgeschlagen, dass die Bremssteuereinrichtung zumindest zwei Bremssteuereinheiten zur Steuerung der elektrischen Bremseinheit aufweist und die Überwachungseinrichtung zumindest zwei voneinander unterschiedliche Überwachungseinheiten umfasst, die jeweils einer unterschiedlichen Bremssteuereinheit zugeordnet sind. Hierdurch kann ein die Reibungsbremseinheit besonders schonender Betrieb erreicht werden. Die Anzahl der Fälle, die während der Lebensdauer der Bremskomponenten der Reibungsbremseinheit auftreten können und bei denen eine Vollbremsung überwiegend oder vollständig mittels der Reibungsbremseinheit durchgeführt werden muss, kann nämlich dadurch weiter reduziert werden.

Ferner wird zu einer weiteren Erhöhung der Sicherheit vorgeschlagen, dass die Bremssteuereinrichtung dazu vorgesehen ist, bei einer mittels der Überwachungseinrichtung erkannten, gegenüber einer Soll-Bremswirkung mangelnden Bremswirkung der elektrischen Bremseinheit die Reibungsbremseinheit zu einer Bremswirkungskompensation zu steuern. Durch die Bremswirkungskompensation kann besonders vorteilhaft der Unterschied der durch die elektrische Bremseinheit erbrachten oder erbringbaren Bremswirkung zur Soll-Bremswirkung durch die Reibungsbremseinheit kompensiert werden.

In einer vorteilhaften Ausbildung der Erfindung wird vorgeschlagen, dass der Verbundwerkstoff ein keramischer Verbundwerkstoff ist. Unter einem keramischen Werkstoff soll ein Werkstoff verstanden werden, dessen chemische Zusammensetzung Siliciumcarbid (SiC) enthält. Dieser Werkstoff eignet sich vorteilhafterweise für Hochtemperaturanwendungen. Insbesondere kann eine thermische Belastung von über 800 °C, insbesondere über 1000 °C erreicht werden. Eine mittels dieses Stoffs hergestellte Bremskomponente ist vorteilhafterweise kompakter und leichter als eine konventionelle Bremskomponente aus Stahlguss oder Grauguss.

Insbesondere wird vorgeschlagen, dass der Verbundwerkstoff eine Oxidationsgrenztemperatur in der Spanne von 300 bis 500 °C aufweist. Hierdurch kann eine kostengünstige, mit marktüblichen Elementen herstellbare Reibungsbremseinheit erreicht werden.

Besonders vorteilhaft ist der Verbundwerkstoff für einen schadenfreien Betrieb bis Temperaturen in der Spanne von 800 bis 1400 °C, insbesondere in der Spanne von 800 bis 1300 °C ausgelegt. Hierdurch kann eine Reibungsbremseinheit erreicht werden, die - trotz eines Übelastbetriebs über eine Oxidationsgrenztemperatur - zur Durchführung einer sicheren Vollbremsung des Fahrzeugs in einer ungünstigen Geschwindigkeits- und/oder Streckengefällesituation geeignet ist. Unter einem "schadenfreien" Betrieb der Bremskomponente soll eine Betriebsphase verstanden werden, mit welcher - abgesehen von Alterungseffekten - keine signifikante Beeinträchtigung für einen weiteren Betrieb der Bremskomponente einhergeht.

Das Fahrzeug kann insbesondere als Kraftfahrzeug ausgebildet sein, welches z.B. für den Straßenverkehr ausgelegt ist, ohne an Schienen gebunden zu sein. Insbesondere kann das Fahrzeug als Personenkraftwagen (PkW), Omnibus oder Lastkraftwagen (Lkw) ausgebildet sein.

Die Erfindung eignet sich insbesondere für ein für den Transport von Personen ausgebildetes Schienenfahrzeug. In einer besonders vorteilhaften Ausbildung ist das Schienenfahrzeug für einen Hochgeschwindigkeitsverkehr mit einer maximalen Betriebsgeschwindigkeit von zumindest 350 km/h geeignet.

Es werden Ausführungsbeispiele der Erfindung anhand der Zeichnungen näher erläutert. Es zeigen:
- Figur 1:: ein Schienenfahrzeug in einer schematischen Seitenansicht, mit einer Antriebseinrichtung und einer Bremseinrichtung,
- Figur 2:: eine Antriebseinheit der Antriebseinrichtung,
- Figur 3:: eine Schaltung der Bremseinrichtung mit einer Bremssteuereinrichtung,
- Figur 4:: eine alternative Bremssteuereinrichtung mit redundanten Bremssteuereinheiten,
- Figur 5:: eine Triebachse des Schienenfahrzeugs mit einem Motor und einer Bremsscheibe in einer Draufsicht und
- Figur 6:: ein Fahrwerk eines Kraftfahrzeugs in einer Draufsicht.

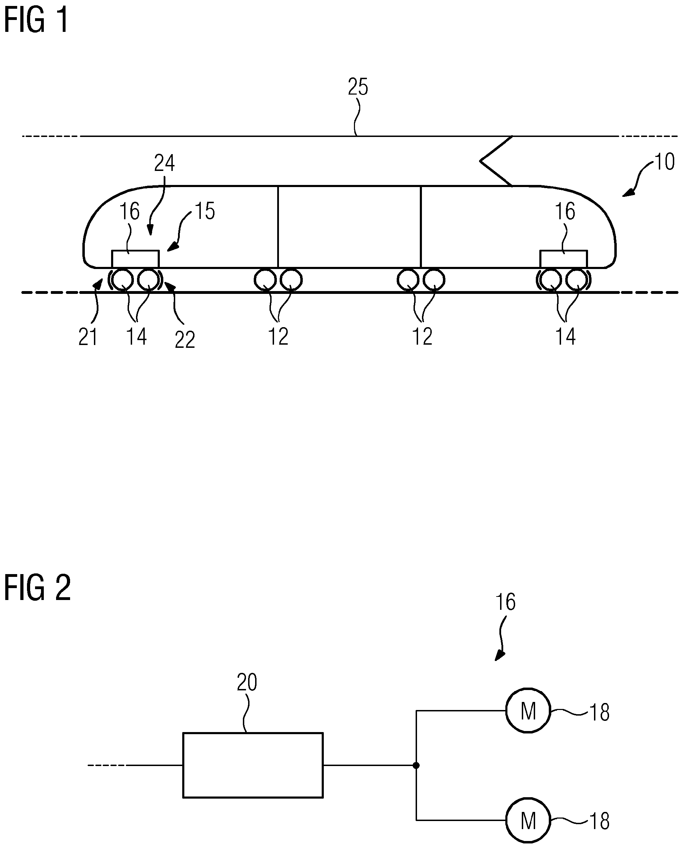

Figur 1 zeigt ein als Triebzug ausgebildetes Schienenfahrzeug 10 in einer stark schematisierten Seitenansicht. Es weist Laufachsen 12 und als Triebachsen 14 ausgebildete Triebradeinheiten auf, die in einem Traktionsmodus mittels einer Antriebseinrichtung 15 angetrieben werden. Die Triebachsen 14 sind in Triebfahrwerkeinrichtungen, insbesondere Triebdrehgestellen gelagert. Das Schienenfahrzeug 10 ist für einen Hochgeschwindigkeitsverkehr ausgelegt und weist eine maximal zugelassene Geschwindigkeit im Fahrgastbetrieb von 350 km/h auf.

In der gezeigten Ausführung als Triebzug entspricht das Schienenfahrzeug 10 einem Verband von Wagen, die jeweils für den Transport von Passagieren ausgelegt sind, wobei zumindest einer der Wagen als Triebwagen mit Triebachsen 14 ausgebildet ist. In einer alternativen Ausführung kann das Schienenfahrzeug als ein Verband umfassend ein Triebfahrzeug und einen mit ihm gekoppelten Satz antriebsloser Reisezugwagen ausgebildet sein.

Die Antriebseinrichtung 15 weist einen Satz von Antriebseinheiten 16 auf, die jeweils einer unterschiedlichen Triebfahrwerkeinrichtung zugeordnet sind. Die Antriebseinheiten 16 weisen wie in Figur 2 gezeigt Antriebsmotoren 18 auf, die insbesondere als Drehstrommaschine ausgebildet und jeweils zum Antreiben einer unterschiedlichen Triebachse 14 vorgesehen sind. Zur Versorgung der Antriebsmotoren 18 mit elektrischer Leistung umfassen die Antriebseinheiten 16 ferner jeweils zumindest eine mit diesen in Wirkverbindung stehende Leistungsversorgungseinheit 20. Diese ist aus dem Stand der Technik bekannt und weist einen nicht näher dargestellten Wechselrichter auf, welcher in einem Traktionsmodus der Antriebseinheit 16 durch die Ansteuerung elektronischer Schaltelemente - auch "Ventile" genannt - einer Leistungselektronik ausgehend von einer Gleichspannung einen in Spannung und Frequenz variablen Strom gemäß der zu bereitstellenden Leistung für den oder die zugeordneten Antriebsmotoren 18 erzeugt. Die in einem zugeordneten Gleichspannungszwischenkreis hierzu verfügbare Energie wird aus einer Hochspannungsnetzversorgung 25 bezogen. Eine aus dieser bezogene Energie wird in einem Traktionsmodus über einen Stromabnehmer und weitere, nicht dargestellte elektrische Wandlungseinrichtungen, wie insbesondere einen Transformator oder einen Spannungswandler, einen Gleichrichter usw. zur Antriebseinrichtung 15 geführt. Im Traktionsmodus der Antriebseinheiten 16 werden die Schaltelemente der Wechselrichter gemäß einer Schaltstrategie gesteuert, um über die Antriebsmotoren 18 ein Antriebsmoment auf die zugeordneten Triebachsen 14 zu erzeugen.

Das Schienenfahrzeug 10 weist außerdem eine Bremseinrichtung 21 auf. Diese umfasst eine weiter unten näher beschriebene Reibungsbremseinheit 22 und eine elektrische Bremseinheit 24. In einem normalen Bremsmodus der Bremseinrichtung 21 erfolgt ein Bremsvorgang des Schienenfahrzeugs 10 zumindest mittels der Antriebseinheiten 16, die dabei jeweils die Funktion einer elektrodynamischen Bremse haben. Die Antriebseinheiten 16 bilden daher jeweils einen Bestandteil der elektrischen Bremseinheit 24.

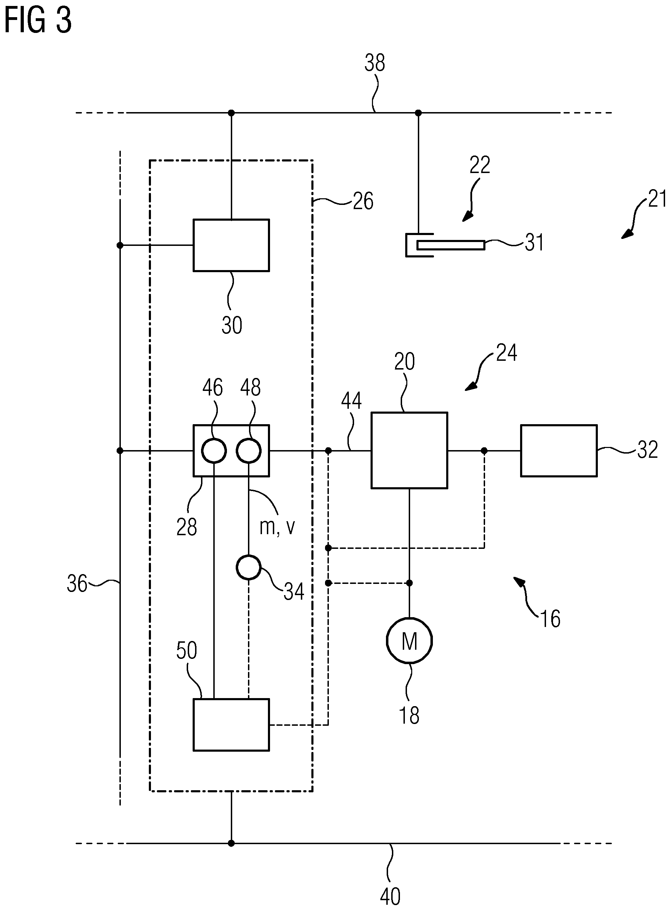

Zur Steuerung der Reibungsbremseinheit 22 und der elektrischen Bremseinheit 24 weist die Bremseinrichtung 21 eine Bremssteuereinrichtung 26 auf. Diese wird anhand der Figur 3 näher erläutert. In der Figur ist lediglich eine der Antriebseinheiten 16 dargestellt, wobei die folgende Beschreibung Anwendung für weitere, nicht gezeigte Antriebseinheiten 16 findet.

Die Bremssteuereinrichtung 26 umfasst eine Bremssteuereinheit 28, die dazu vorgesehen ist, in einem aktiven Zustand die Leistungsversorgungseinheit 20 der Antriebseinheit 16 für einen Bremsvorgang der elektrischen Bremseinheit 24 zu steuern. Die Bremssteuereinheit 28 ist dazu vorgesehen, für diesen Bremsvorgang die Schaltelemente des Wechselrichters der Leistungsversorgungseinheit 20 gemäß einer Schaltstrategie derart zu steuern, dass über einen zugeordneten Antriebsmotor 18 ein Bremsmoment auf die zugeordnete Antriebsachse 14 erzeugt wird. Bei einem Bremsvorgang mittels der elektrischen Bremseinheit 24 wirkt der Antriebsmotor 18 als Generator, wobei die im Bremsvorgang in elektrischen Strom umgewandelte Energie mittels eines Bremswiderstands 32 in Wärme umgewandelt wird. Alternativ oder zusätzlich kann die Energie in die Hochspannungsnetzversorgung 25 zurückgespeist, auf dem Fahrzeug verwendet oder in einen Mobilspeicher eingespeichert werden.

Die Bremssteuereinheit 28 steht mit der Leistungsversorgungseinheit 20 in Wirkverbindung. Neben einer Schnittstelle zur Leistungsversorgungseinheit 20 weist die Bremssteuereinheit 28 eine weitere Schnittstelle auf, durch welche sie mit einer Sensoreinheit 34 in Wirkverbindung steht. Die Sensoreinheit 34 dient dazu, eine Geschwindigkeitskenngröße v und eine Massenkenngröße m zu erfassen, die Eingangsparameter für die Erzeugung von Steuersignalen 44 durch die Bremssteuereinheit 28 darstellen.

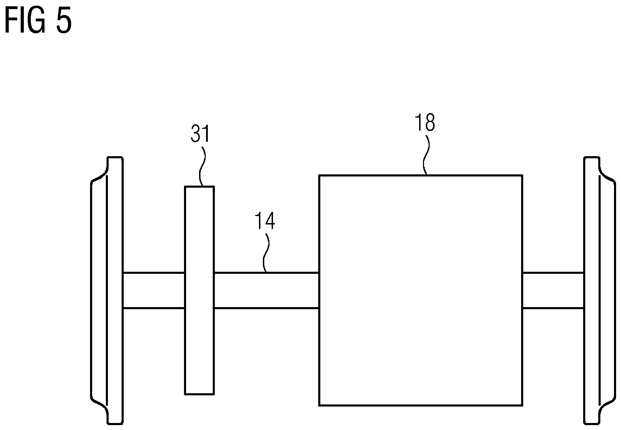

Die Bremssteuereinrichtung 26 umfasst außerdem eine Bremssteuereinheit 30, die zur Steuerung von Komponenten der Reibungsbremseinheit 22 ausgebildet ist. Insbesondere steuert sie - über eine Schienenfahrzeughauptluftleitung 38 - bei einer Betätigung der Reibungsbremseinheit 22 Aktuatoren, durch welche ein Kontakt zwischen als Bremsscheibe ausgebildeten Bremskomponenten 31 (siehe auch Figur 5) und Bremsbelägen hergestellt wird.

Die Bremssteuereinrichtung 26, insbesondere deren Bremssteuereinheiten 28 und 30, steht ferner über Schnittstellen in Wirkverbindung mit der Schienenfahrzeugleittechnik, indem sie mit einem Datenbus 36 des Schienenfahrzeugs 10 verbunden ist. Über diese weiteren Schnittstellen können weitere Eingangsparameter für die Bremssteuereinheiten 28, 30 zur Verfügung gestellt werden, wie insbesondere eine Kenngröße, die durch den Fahrzeugführer, durch eine automatische Fahrzeugsteuerung und/oder durch eine Notbremseinrichtung geforderte Bremswirkung darstellt. Die Bremssteuereinrichtung 26 ist über eine Bordnetzversorgung 40 mit elektrischer Energie versorgt.

Auf der Basis der oben genannten Eingangsparameter erzeugt die Bremssteuereinheit 28 in einem normalen Bremsmodus, in welchem sie sich in einem aktiven Zustand befindet, Steuersignale 44, die die Leistungsversorgungseinheit 20 entsprechend einer bestimmten, zu erzielenden Bremswirkung steuert. Hierzu weist die Bremssteuereinheit 28 zumindest eine Recheneinheit 46 und eine Speichereinheit 48 auf, in welcher eine Software gespeichert ist. In dieser Software ist insbesondere die Bremsmodusschaltstrategie für die Schaltelemente des Wechselrichters programmiert. In einem normalen Bremsmodus der Bremseinrichtung 21 besitzt die elektrische Bremseinheit 24 eine höhere Priorität als die Reibungsbremseinheit 22, wobei ein möglichst großer Teil der zu erzielenden Bremswirkung durch die elektrische Bremseinheit 24 zu erzeugen ist und die Reibungsbremseinheit 22 bei Bedarf - insbesondere in einem niedrigen Geschwindigkeitsbereich - zur Unterstützung der elektrischen Bremseinheit 24 dient.

Der Bremssteuereinheit 28 ist eine Überwachungseinrichtung 50 der Bremseinrichtung 21 zugeordnet, die dazu vorgesehen ist, die mittels der elektrischen Bremseinheit 24 erzielte oder erzielbare Bremswirkung zu überwachen. Hierzu wird eine Bremswirkungskenngröße, insbesondere eine Bremsmomentkenngröße herangezogen und mit einem Sollwert verglichen. Die Bremswirkungskenngröße kann z.B. mittels eines Beschleunigungssensors erfasst werden und/oder mittels einer Auswertung der Geschwindigkeitskenngröße v ermittelt werden. Alternativ oder zusätzlich kann die Bremswirkungskenngröße mittels einer Überwachung der durch die Bremssteuereinheit 28 erzeugten Steuersignale 44 ermittelt werden. Außerdem können wie in der Figur dargestellt eine elektrische Größe - z.B. ein elektrischer Strom - des zugeordneten Antriebsmotors 18 und/oder der Leistungsversorgungseinheit 20 überwacht, insbesondere ausgewertet werden.

Im normalen Bremsmodus der Bremseinrichtung 21 - z.B. während einer normalen Betriebsbremsung - wird ein Soll-Bremsmoment überwiegend, insbesondere weitestgehend mittels der elektrischen Bremseinheit 24 bereitgestellt. Die Bremssteuereinheit 30, welche mit der Schienenfahrzeughauptluftleitung 38 in Wirkverbindung steht, steuert in diesem normalen Bremsmodus die Reibungsbremseinheit 22, deren Funktion wie oben beschrieben die Unterstützung der elektrischen Bremseinheit 24 - insbesondere in einem niedrigen Geschwindigkeitsbereich - umfasst.

Wird mittels der Überwachungseinrichtung 50 erkannt, dass die durch die elektrische Bremseinheit 24 erzeugte bzw. erzielbare Bremswirkung zur Bereitstellung eines Soll-Bremsmoments nicht ausreicht, wird die elektrische Bremseinheit 24 als fehlerhaft betrachtet und die Bremssteuereinrichtung 26 aktiviert einen Sicherheitsmodus der Reibungsbremseinheit 22, in welchem diese das fehlende Bremsmoment kompensiert, ggf. das gesamte Soll-Bremsmoment erzeugt.

Der Einschränkung der elektrischen Bremseinheit 24 kann ein Fehler einer Antriebseinheit 16 und/oder einer dieser zugeordneten Bremssteuereinheit 28 zugrunde liegen.

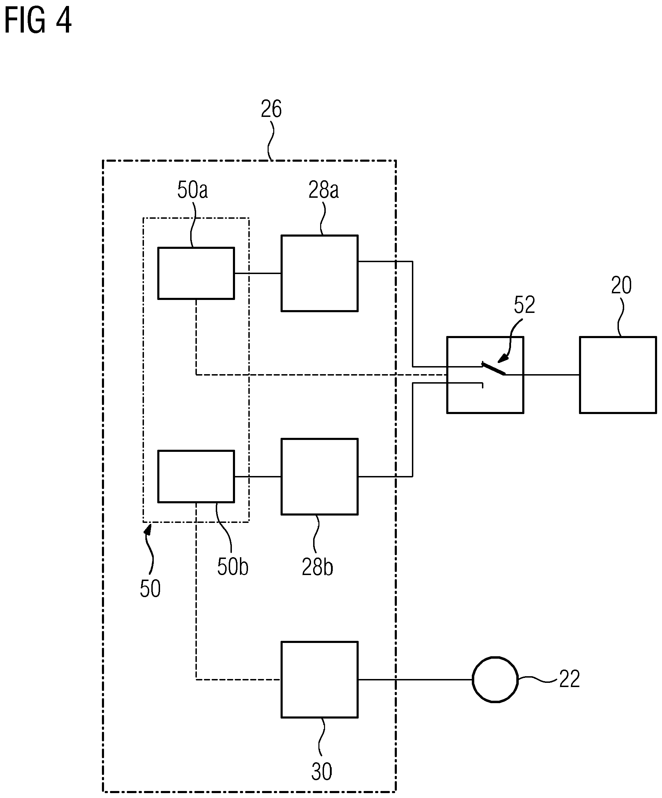

Figur 4 zeigt eine spezielle Ausführung der Bremssteuereinrichtung 26. In diesem Beispiel weist sie zwei Bremssteuereinheiten 28a, 28b, die jeweils wie oben beschrieben zur Steuerung einer gleichen Leistungsversorgungseinheit 20 der Antriebseinrichtung 15 für einen Bremsvorgang der elektrischen Bremseinheit 24 vorgesehen ist. Die Überwachungseinrichtung 50 weist zwei Überwachungseinheiten 50a und 50b, die jeweils zur Überwachung einer unterschiedlichen Bremssteuereinheit 28a bzw. 28b vorgesehen sind.

Die Bremssteuereinheiten 28a, 28b stehen jeweils über eine Schalteinheit 52 mit der Leistungsversorgungseinheit 20 in Verbindung. Diese in der Figur schematisch dargestellte Schalteinheit 52 kann einen mechanischen Schalter aufweisen oder als softwaretechnische Lösung implementiert sein.

Im normalen Bremsmodus erfolgt eine Steuerung der elektrischen Bremseinheit 24 grundsätzlich mittels der Bremssteuereinheit 28a. Die Bremssteuereinheit 28b befindet sich dabei durch eine entsprechende Stellung der Schalteinheit 52 in einem inaktiven Zustand. Die Überwachung eines Bremsvorgangs der elektrischen Bremseinheit 24 erfolgt wie oben beschrieben mittels der Überwachungseinheit 50a. Wird wie oben beschrieben erkannt, dass ein für die elektrische Bremseinheit 24 vorgesehenes Soll-Bremsmoment von dieser nicht bereitgestellt werden kann, erfolgt von der Überwachungseinheit 50a eine Betätigung der Schalteinheit 52, wodurch die Bremssteuereinheit 28a in einen inaktiven Zustand versetzt wird und die Bremssteuereinheit 28b aktiviert wird. Die Steuerung der elektrischen Bremseinheit 24 erfolgt dann weiter mittels der Bremssteuereinheit 28b.

Der Bremssteuereinheit 28b ist eine zweite, von der ersten Überwachungseinheit 50a softwaretechnisch und/oder hardwaretechnisch unterschiedliche Überwachungseinheit 50b zugeordnet. Diese ist dazu vorgesehen, die mittels der elektrischen Bremseinheit 24 mit der Bremssteuereinheit 28b erzielte bzw. erzielbare Bremswirkung zu überwachen. Hierzu wird - wie oben bereits beschrieben - eine Bremswirkungskenngröße, insbesondere eine Bremsmomentkenngröße, erfasst bzw. ermittelt und mit einem Sollwert verglichen.

Wird mittels der zweiten Überwachungseinheit 50b erkannt, dass das durch die elektrische Bremseinheit 24 erzeugte bzw. erzielbare Bremswirkung nicht ausreicht, wird die Bremssteuereinheit 28b als fehlerhaft betrachtet und es wird wie oben beschrieben der Sicherheitsmodus der Reibungsbremseinheit 22 aktiviert.

Die Bremssteuereinheiten 28a, 28b sind zueinander diversitär redundant ausgebildet. Sie basieren dabei auf unterschiedlichen Technologien. Unter einer Technologie wird die konstruktive - oder hardwaretechnische - und/oder die algorithmische - oder softwaretechnische - Ausführung erfasst. In einer beispielhaften Konfiguration kann die erste Bremssteuereinheit 28 in der Form eines Signalprozessors ausgebildet sein, wobei die algorithmische Implementierung einer feldorientierten Regelung entspricht. Die Bremssteuereinheit 28b kann als Field Programmable Gate Array (FPGA) oder "im Feld programmierbare Gatter-Anordnung" ausgebildet sein, wobei die algorithmische Implementierung einer schaltorientierten Regelung entspricht.

Figur 5 zeigt eine Triebachse 14, den ihr zugeordneten Antriebsmotor 18 und eine Bremskomponente 31 der Reibungsbremseinheit 22. Diese ist als eine Bremsscheibe ausgebildet, die aus einem Verbundwerkstoff hergestellt ist. Insbesondere ist die Bremskomponente 31 als Keramikbremsscheibe aus einem C/C-SiC-Kohlefaserverbundwerkstoff ausgebildet. Im oben beschriebenen normalen Bremsmodus der Bremseinrichtung 21 ist die Reibungsbremseinheit 22 durch die elektrische Bremseinheit 24 soweit entlastet, dass diese nicht die entsprechende Oxidationstemperaturgrenze - für das gewählte Material in der Spanne von ca. 300 °C bis 500 °C - überschreitet. Wird der Sicherheitsmodus der Reibungsbremseinheit 22 aktiviert, können die Bremskomponenten 31 die entsprechende Überlast sehr gut beherrschen, da sie für einen schadfreien Betrieb bis Temperaturen von mehr als 800 °C, vorzugsweise bis 1300 °C ausgelegt, d.h. überlastfähig sind.

Das betrachtete Ausführungsbeispiel eines Schienenfahrzeugs ist beispielhaft. In alternativen Ausführungen sind Fahrzeuge denkbar, die nicht an Schienen gebunden sind, wie z.B. ein PkW, ein Omnibus oder ein Lkw.

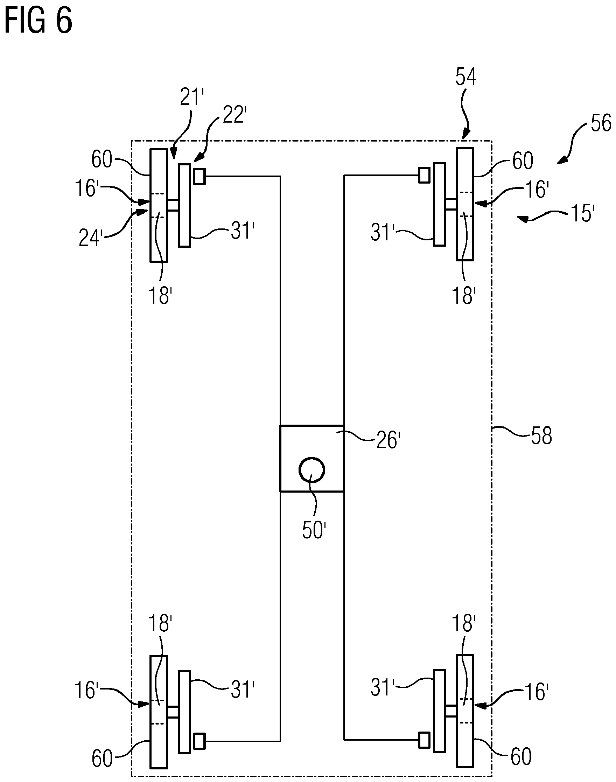

Figur 6 zeigt in einer stark schematisierten Draufsicht ein Fahrwerk 54 eines Kraftfahrzeugs 56. Dieses ist insbesondere als Personenkraftwagen (Pkw) ausgebildet, wobei eine Ausbildung als Lastkraftwagen (Lkw) oder Omnibus ebenfalls denkbar ist. Eine Außenkontur 58 des Kraftfahrzeugs 56 ist gestrichelt und schematisch dargestellt.

Das Fahrwerk 54 weist einen Satz von Triebradeinheiten auf, die jeweils als antreibbare Fahrzeugräder 60 ausgebildet sind. Die Fahrzeugräder 60 sind voneinander mechanisch unabhängig und bilden insbesondere autonome antreibbare Einheiten. Den Fahrzeugrädern 60 sind jeweils eine Antriebseinheit 16' der Antriebseinrichtung 15' des Kraftfahrzeugs 56 zugeordnet. Die Antriebseinheiten 16' weisen jeweils einen als Radnabenantrieb ausgebildeten Antriebsmotor 18' auf. Zur Ausgestaltung und Funktionsweise der Antriebseinheiten 16' wird auf die obige Beschreibung der Antriebseinheiten 16 verwiesen, die m.m. auf die Antriebseinheiten 16' angewandt werden kann. Die Antriebseinheiten 16' bilden ferner Bestandteile einer elektrischen Bremseinheit 24'.

Den Fahrzeugrädern 60 sind zudem jeweils zumindest eine Bremskomponente 31' einer Reibungsbremseinheit 22' zugeordnet. Die Bremskomponenten 31' sind als Bremsscheiben ausgebildet, die aus einem Verbundwerkstoff hergestellt sind.

Die elektrische Bremseinheit 24' und die Reibungsbremseinheit 22' sind Bestandteile einer Bremseinrichtung 21' des Kraftfahrzeugs 56, welche außerdem zu Steuerung derselben eine Bremssteuereinrichtung 26' umfassend eine Überwachungseinrichtung 50' aufweist. Die obige Beschreibung zur Bremseinrichtung 21, insbesondere zu deren elektrischer Bremseinheit 24, Reibungsbremseinheit 22 und Bremssteuereinrichtung 26 mit der Überwachungseinrichtung 50 finden m.m. auf die entsprechenden Einheiten im vorliegenden Ausführungsbeispiel Anwendung, wobei auf unnötige Wiederholungen verzichtet wird.

Das Ausführungsbeispiel der Figur 6 kann außerdem bei Schienenfahrzeugen, beispielsweise bei Straßenbahnen Anwendung finden.

## Patentansprüche

1. Fahrzeug mit einer Bremseinrichtung (21; 21'), die zumindest
- eine Reibungsbremseinheit (22; 22') mit wenigstens Bremskomponenten (31; 31') aus einem Verbundwerkstoff,
- eine elektrische Bremseinheit (24; 24'), und
- eine Bremssteuereinrichtung (26; 26') mit einer Überwachungseinrichtung (50; 50') zur Überwachung eines mittels der elektrischen Bremseinheit (24; 24') durchgeführten Bremsvorgangs aufweist,
wobei die Bremssteuereinrichtung (26; 26') dazu vorgesehen ist, in einem normalen Bremsmodus einen Bremsvorgang prioritär mittels der elektrischen Bremseinheit (24) auszuführen, und in einem Sicherheitsmodus bei einer mittels der Überwachungseinrichtung (50; 50') erkannten Einschränkung der elektrischen Bremseinheit (24; 24') den Bremsvorgang prioritär mittels der Reibungsbremseinheit (22; 22') auszuführen, und
wobei die Bremskomponenten (31; 31') der Reibungsbremseinheit (22; 22') derart ausgelegt sind, dass in dem normalen Bremsmodus eine Oxidationsgrenztemperatur des Verbundwerkstoffs nicht überschritten wird, und in dem Sicherheitsmodus der Verbundwerkstoff in einem Temperaturbereich betreibbar ist, welcher oberhalb der Oxidationsgrenztemperatur liegt.

2. Fahrzeug nach Anspruch 1,
**gekennzeichnet durch**
eine Antriebseinrichtung (15; 15'), wobei die elektrische Bremseinheit (24; 24') zumindest eine Antriebseinheit (16; 16') der Antriebseinrichtung (15; 15') aufweist.

3. Fahrzeug nach Anspruch 2,
**dadurch gekennzeichnet, dass**
mehreren Fahrzeugrädern (60) jeweils zumindest eine der Bremskomponenten (31') der Reibungsbremseinheit (22') und eine Antriebseinheit (24') der Antriebseinrichtung (15') zugeordnet sind, wobei die Antriebseinheit (24') Bestandteil der elektrischen Bremseinheit (24') ist.

4. Fahrzeug nach einem der vorhergehenden Ansprüche,
**dadurch gekennzeichnet, dass**
die Bremssteuereinrichtung (26) zumindest zwei Bremssteuereinheiten (28a, 28b) zur Steuerung der elektrischen Bremseinheit (24) aufweist, die zueinander redundant oder diversitär redundant ausgebildet sind.

5. Fahrzeug nach einem der vorhergehenden Ansprüche,
**dadurch gekennzeichnet, dass**
die Bremssteuereinrichtung (26) zumindest zwei Bremssteuereinheiten (28a, 28b) zur Steuerung der elektrischen Bremseinheit (24) aufweist und die Überwachungseinrichtung (50) zumindest zwei voneinander unterschiedliche Überwachungseinheiten (50a, 50b) umfasst, die jeweils einer unterschiedlichen Bremssteuereinheit (28a, 28b) zugeordnet sind.

6. Fahrzeug nach einem der vorhergehenden Ansprüche,
**dadurch gekennzeichnet, dass**
die Bremssteuereinrichtung (26) dazu vorgesehen ist, bei einer mittels der Überwachungseinrichtung (50) erkannten, gegenüber einer Soll-Bremswirkung mangelnden Bremswirkung der elektrischen Bremseinheit (24) die Reibungsbremseinheit (22) zu einer Bremswirkungskompensation zu steuern.

7. Fahrzeug nach einem der vorhergehenden Ansprüche,
**dadurch gekennzeichnet, dass**
der Verbundwerkstoff als Faserverbundwerkstoff ausgebildet ist.

8. Fahrzeug nach Anspruch 7,
**dadurch gekennzeichnet, dass**
der Verbundwerkstoff als Kohlefaserverbundwerkstoff ausgebildet ist.

9. Fahrzeug nach einem der vorhergehenden Ansprüche,
**dadurch gekennzeichnet, dass**
der Verbundwerkstoff ein keramischer Verbundwerkstoff ist.

10. Fahrzeug nach einem der vorhergehenden Ansprüche,
**dadurch gekennzeichnet, dass**
der Verbundwerkstoff eine Oxidationsgrenztemperatur in der Spanne von 300 bis 500 °C aufweist.

11. Fahrzeug nach einem der vorhergehenden Ansprüche,
**dadurch gekennzeichnet, dass**
der Verbundwerkstoff für einen schadenfreien Betrieb bis Temperaturen in der Spanne von 800 bis 1400 °C ausgelegt ist.

12. Fahrzeug nach einem der vorhergehenden Ansprüche, **gekennzeichnet durch**
die Ausbildung als Kraftfahrzeug (56).

13. Fahrzeug nach einem der vorhergehenden Ansprüche, **gekennzeichnet durch**
die Ausbildung als Schienenfahrzeug (10).

14. Fahrzeug nach Anspruch 13,
**gekennzeichnet durch**
die Ausbildung als Triebzug für einen Hochgeschwindigkeitsverkehr mit einer maximalen Betriebsgeschwindigkeit von zumindest 350 km/h.

15. Fahrzeug nach einem der vorhergehenden Ansprüche,
**dadurch gekennzeichnet, dass**
der normale Bremsmodus die Ausführung einer Betriebsbremsung umfasst.

16. Fahrzeug nach einem der vorhergehenden Ansprüche,
**dadurch gekennzeichnet, dass**
der Sicherheitsmodus die Ausführung einer Vollbremsung umfasst.

## Claims

1. Vehicle having a braking device (21; 21') which has at least
- a friction brake unit (22; 22') with at least brake components (31; 31') made of a composite material,
- an electrical brake unit (24; 24') and
- a brake control device (26; 26') with a monitoring device (50; 50') for monitoring a braking operation performed by the electrical brake unit (24; 24'),
wherein, in a normal braking mode, the brake control device (26; 26') is provided to perform a braking operation with the electrical brake unit (24) as a priority and, in a safety mode with a limitation of the electrical brake unit (24; 24') detected by the monitoring device (50; 50'), to perform the braking operation with the friction brake unit (22; 22') as a priority, and
wherein the brake components (31; 31') of the friction brake unit (22; 22') are designed such that in the normal operating mode an oxidation limit temperature of the composite material is not exceeded, and in the safety mode the composite material can be operated in a temperature range which lies above the oxidation limit temperature.

2. Vehicle according to claim 1,
**characterised by**
a drive device (15; 15'), wherein the electrical brake unit (24; 24') has at least one drive unit (16; 16') of the drive device (15; 15').

3. Vehicle according to claim 2,
**characterised in that**
at least one of the brake components (31') of the friction brake unit (22') and a drive unit (24') of the drive device (15') in each case are associated with a plurality of vehicle wheels (60), wherein the drive unit (24') is a component of the electrical brake unit (24').

4. Vehicle according to one of the preceding claims,
**characterised in that**
the brake control device (26) has at least two brake control units (28a, 28b) for controlling the electrical brake unit (24), which are redundant to each other or diversely redundant in design.

5. Vehicle according to one of the preceding claims,
**characterised in that**
the brake control device (26) has at least two brake control units (28a, 28b) for controlling the electrical brake unit (24) and the monitoring device (50) comprises at least two monitoring units (50a, 50b), which are different from each other and are each associated with a different brake control unit (28a, 28b).

6. Vehicle according to one of the preceding claims,
**characterised in that**
the brake control device (26) is provided to control the friction brake unit (22) for a braking effect compensation in the case of a braking effect of the electrical brake unit (24), detected by the monitoring device (50), which is insufficient with respect to a desired braking effect.

7. Vehicle according to one of the preceding claims,
**characterised in that**
the composite material is designed as a fibre composite material.

8. Vehicle according to claim 7,
**characterised in that**
the composite material is designed as a carbon fibre composite material.

9. Vehicle according to one of the preceding claims,
**characterised in that**
the composite material is a ceramic composite material.

10. Vehicle according to one of the preceding claims,
**characterised in that**
the composite material has an oxidation limit temperature in the range of 300 to 500 °C.

11. Vehicle according to one of the preceding claims,
**characterised in that**
the composite material is designed for damage-free operation up to temperatures in the range of 800 to 1,400 °C.

12. Vehicle according to one of the preceding claims,
**characterised by**
the design as a motor vehicle (56).

13. Vehicle according to one of the preceding claims,
**characterised by**
the design as a rail vehicle (10).

14. Vehicle according to claim 13,
**characterised by**
the design as a multiple unit for high-speed traffic with a maximum operating speed of at least 350 km/h.

15. Vehicle according to one of the preceding claims,
**characterised in that**
the normal braking mode comprises the execution of a service braking operation.

16. Vehicle according to one of the preceding claims,
**characterised in that**
the safety mode comprises the execution of an emergency braking operation.

## Revendications

1. Véhicule ayant un dispositif (21 ; 21') de freinage, qui a au moins
- une unité (22 ; 22') de frein à friction, ayant au moins des éléments (31 ; 31') de frein en matériau composite,
- une unité (24, 24') électrique de frein, et
- un dispositif (26 ; 26') de commande de frein, comprenant un dispositif (50, 50') de contrôle pour contrôler le freinage effectué au moyen de l'unité (24, 24') électrique de frein,
dans lequel le dispositif (26, 26') de commande de frein est prévu pour effectuer, dans un mode de freinage normal, une opération de freinage prioritairement au moyen de l'unité (24) électrique de frein, et pour effectuer, dans un mode de sécurité, s'il y a une limitation détectée au moyen du dispositif (50, 50') de contrôle, de l'unité (24, 24') électrique de frein, l'opération de freinage prioritairement au moyen de l'unité (22, 22') de frein à friction, et
dans lequel les éléments (31, 31') de frein de l'unité (22, 22') de frein à friction sont conçus de manière à ne pas dépasser, dans le mode de freinage normal, une température limite d'oxydation du matériau composite et de manière à ce que, dans le mode de sécurité, le matériau composite puisse fonctionner dans une plage de température, qui est au-dessus de la température limite d'oxydation.

2. Véhicule suivant la revendication 1,
**caractérisé par**
un dispositif (15, 15') d'entraînement, l'unité (24, 24') électrique de frein ayant au moins une unité (16 ; 16') d'entraînement du dispositif (15, 15') d'entraînement.

3. Véhicule suivant la revendication 2,
**caractérisé en ce que**,
à plusieurs roues (60) du véhicule sont affectés, respectivement, a moins l'un éléments (31') de frein de l'unité (22') de frein à friction et une unité (24') d'entraînement du dispositif (15') d'entraînement, l'unité (24') d'entraînement faisant partie de l'unité (24') électrique de frein.

4. Véhicule suivant l'une des revendications précédentes,
**caractérisé en ce que**
le dispositif (26) de commande de frein a au moins deux unités (28a, 28b) de commande de frein pour commander l'unité (24) électrique de frein, qui sont constituées en étant redondantes l'une par rapport à l'autre ou redondantes en diversité.

5. Véhicule suivant l'une des revendications précédentes,
**caractérisé en ce que**
le dispositif (26) de commande de frein a au moins deux unités (28a, 28b) de commande de frein pour commander l'unité (24) électrique de frein et le dispositif (50) de contrôle comprend au moins deux unités (50a, 50b) de contrôle différentes l'une de l'autre, qui sont associées chacune à une unité (28a, 28b) de commande de frein différente.

6. Véhicule suivant l'une des revendications précédentes,
**caractérisé en ce que**
le dispositif (26) de commande de frein est prévu pour, lors d'un effet de freinage, détecté au moyen du dispositif (50) de contrôle, qui est défectueux par rapport à un effet de freinage de consigne, de l'unité (24) électrique de frein, commander l'unité (22) de frein à friction pour une compensation de l'effet de freinage.

7. Véhicule suivant l'une des revendications précédentes,
**caractérisé en ce que**
le matériau composite est constitué sous la forme d'un matériau composite à fibre.

8. Véhicule suivant la revendication 7,
**caractérisé en ce que**
le matériau composite est constitué sous la forme d'un matériau composite en fibre de carbone.

9. Véhicule suivant l'une des revendications précédentes, **caractérisé en ce que**
le matériau composite est un matériau composite céramique.

10. Véhicule suivant l'une des revendications précédentes,
**caractérisé en ce que**
le matériau composite a une température limite d'oxydation allant de 300 à 500°C.

11. Véhicule suivant l'une des revendications précédentes,
**caractérisé en ce que**
le matériau composite est conçu pour un fonctionnement sans dommage jusqu'à des températures allant de 800 à 1400°C.

12. Véhicule suivant l'une des revendications précédentes,
**caractérisé en ce qu'**
il est sous la forme d'un véhicule (56) automobile.

13. Véhicule suivant l'une des revendications précédentes,
**caractérisé en ce qu'**
il est constitué sous la forme d'un véhicule (10) ferroviaire.

14. Véhicule suivant la revendication 13,
**caractérisé en ce qu'**
il est constitué sous la forme d'une rame automotrice pour le trafic à grande vitesse à une vitesse de fonctionnement maximum d'au moins 350 km/h.

15. Véhicule suivant l'une des revendications précédentes,
**caractérisé en ce que**
le mode normal de frein comprend l'exécution d'un freinage de service.

16. Véhicule suivant l'une des revendications précédentes,
**caractérisé en ce que**
le mode de sécurité comprend l'exécution d'un freinage à fond.
